Europäisches Patentamt

European Patent Office

Office européen des brevets

(19)

(11) Publication number: **0 026 958**
**A1**

(12) **EUROPEAN PATENT APPLICATION**

(21) Application number: **80200943.1**

(22) Date of filing: **06.10.80**

(51) Int. Cl.³: **A 47 J 36/38**

(30) Priority: **09.10.79 BE 258121**

(43) Date of publication of application: **15.04.81**
**Bulletin 81/15**

(84) Designated Contracting States: **DE FR GB NL**

(71) Applicant: **ITT INDUSTRIES, INC., 320 Park Avenue, New York, NY 10022 (US)**

(84) Designated Contracting States: **FR GB NL**

(71) Applicant: **Deutsche ITT Industries GmbH, Hans-Bunte-Strasse 19 Postfach 840, D-7800 Freiburg (DE)**

(84) Designated Contracting States: **DE**

(72) Inventor: **Colley, Jacques Louis Joseph, 274, rue Naniot, B-4000 Liege (BE)**

(74) Representative: **Rosenoer, Jacques, BELL TELEPHONE MANUFACTURING COMPANY S.A. Dépt.des Brevets Francis Wellesplein 1, B-2000 Anvers (BE)**

(54) **Cooking appliance with lid.**

(57) Cooking appliance with lid, such as a domestic deep fryer, wherein the filter for the fumes generated by a cooking operation is constituted by four identical superposed metal grids (113) provided in the upper lid cover (2) of plastic material. The grids which can be removed for cleaning purposes are alternately reversed so that their vents constitute a maze for the fumes. The metal lid 1, when opened beyond the vertical, will collect condensed liquids in its lower part and these will be poured into a basin (114), removably housed next to one of the vat handles (115), upon reclosing the lid. Avoiding the housing of such a receptacle in the lid, enables a vertical skirt (63) part of the lid cover and surrounding the filter to press against an inclined annular part (65) of the lid over the whole of its periphery thereby forcing the fumes to escape only through the grid assembly.

-1-

## Cooking appliance with lid

The invention relates to a perforated lid able to rest on a cooking appliance and containing a filter for the fumes generated by a cooking process.

Such odour filters are already known, e.g. from the European patent application N° 79200492.1 (published under N° 0008838). In general they are essentially constituted by an active charcoal cartridge which must be regularly replaced. Naturally, if replacement is not made timely, the filter would not be able to ensure a sufficient flow during a cooking operation. So as to remedy such drawbacks, other solutions have already been proposed and for instance in the Belgian patent N° 775 415 where such an odour filter using an active charcoal cartridge has been replaced by a lid whose vertical rim is essentially constituted by a metal lattice. Indeed, it has been found that such a filter was reasonably effective in filtering the fumes and offers the advantage not to have to replace a constituent part, as it is possible to regularly clean the lid. However, this solution offers certain disadvantages and for instance the need to completely clean the lid while additionally, the openings of the lid offered by the lattice are not arranged in a horizontal plane.

An object of the invention is to simplify such an arrange-

0026958

-2-

ment by ensuring an adequate flow through such a metal
filter and in facilitating cleaning operations.

In accordance with the first characteristic of the invention,
said filter is constituted by the superposition of a
plurality of metal grids.

In this way, cleaning is facilitated since the metal grids
can be removable and cleaned separately. Moreover, while
using a single type of grid, they can be foreseen with vents
opening on one side and the superposed assembly of the metal
grids can be performed in such a manner that homologous
sides are in opposition in such a manner that the vents of
at least two adjacent grids create a maze for the vapours
going through the filter.

The invention also relates to a hinged perforated lid able
to rest horizontally on top of a cooking appliance and
adapted to unload liquid condensation products produced
by the cooking by draining into a basin when it is pivoted
out of its horizontal position, comprising a metal lid able
to close the container part of the appliance and an upper
lid cover in plastic material fixed on top of said metal
lid and connected to the container by hinge means.

Such a perforated hinged lid has been described in the above
mentioned European patent application in relation with a
domestic deep fryer. It enables to collect condensed
liquids and in practice it has been found that use of such
a metal lid directly in contact with the metal vat of the
appliance when the lid is closed, implies that condensation
will essentially be produced on the lower side of the metal
lid upon opening thereof. On the other hand, as described
in the above mentioned application, the lid which contains
on odour filter whose essential element is generally an active
carbon cartridge, comprises also the basin designed to

0026958

-1-

<u>Cooking appliance with lid</u>

The invention relates to a perforated lid able to rest on a cooking appliance and containing a filter for the fumes generated by a cooking process.

Such odour filters are already known, e.g. from the European patent application N° 79200492.1 (published under N° 0008838). In general they are essentially constituted by an active charcoal cartridge which must be regularly replaced. Naturally, if replacement is not made timely, the filter would not be able to ensure a sufficient flow during a cooking operation. So as to remedy such drawbacks, other solutions have already been proposed and for instance in the Belgian patent N° 775 415 where such an odour filter using an active charcoal cartridge has been replaced by a lid whose vertical rim is essentially constituted by a metal lattice. Indeed, it has been found that such a filter was reasonably effective in filtering the fumes and offers the advantage not to have to replace a constituent part, as it is possible to regularly clean the lid. However, this solution offers certain disadvantages and for instance the need to completely clean the lid while additionally, the openings of the lid offered by the lattice are not arranged in a horizontal plane.

An object of the invention is to simplify such an arrangement by ensuring an adequate flow through such a metal filter and in facilitating cleaning operations.

In accordance with the first characteristic of the invention, said filter is constituted by the superposition of a plurality of metal grids.

In this way, cleaning is facilitated since the metal grids can be removable and cleaned separately. Moreover, while using a single type of grid, they can be foreseen with vents opening on one side and the superposed assembly of the metal grids can be performed in such a manner that homologous sides are in opposition in such a manner that the vents of at least two adjacent grids create a maze for the vapours going through the filter.

The invention also relates to a hinged perforated lid able to rest horizontally on top of a cooking appliance and adapted to unload liquid condensation products produced by the cooking by draining into a basin when it is pivoted out of its horizontal position, comprising a metal lid able to close the container part of the appliance and an upper lid cover in plastic material fixed on top of said metal lid and connected to the container by hinge means.

Such a perforated hinged lid has been described in the above mentioned European patent application in relation with a domestic deep fryer. It enables to collect condensed liquids and in practice it has been found that use of such a metal lid directly in contact with the metal vat of the appliance when the lid is closed, implies that condensation will essentially be produced on the lower side of the metal lid upon opening thereof. On the other hand, as described in the above mentioned application, the lid which contains on odour filter whose essential element is generally an active carbon cartridge, comprises also the basin designed to

-3-

collect the condensed liquids. However, this implies the need of a passage to enable the liquids to run into the basin upon opening of the lid. Moreover, the basin must itself include a small easily detachable lid so as to enable emptying the condensed liquids after a few operations. In this manner, one must take care to ensure fluid-tightness between the upper lid cover in plastic material and the metal lid on the one hand, and between the small lid and the basin which it covers on the other. Otherwise, the whole of the vapours would not necessarily pass through the odour filter

Another object of the invention is to simplify the construction of the lid so as to facilitate a solution ensuring improved fluid-tightness enabling in this manner the whole of the fumes to go through the filter.

In accordance with a second characteristic of the invention, the lid is characterized by a shape for said metal lid enabling to collect said liquid condensation products when the lid is opened beyond a vertical position and by mounting said basin in the cooking appliance below said hinge means so as to enable draining into the basin upon closure of said lid.

Use of the basin mounted in the cooking appliance is already known, e.g. from French patent N° 2 239 224, but in contradistinction with this prior arrangement, in the present case one is concerned with draining the condensed liquids from the lower side of the metal lid which forms a collector upon the lid being opened beyond a vertical position.

The objects and features of the invention mentioned above as well as others and the best manner to attain them shall be better understood from the following description of a detailed embodiment of the invention to be read in conjunction with the accompanying drawings and in which:

-4-

Fig. 1 represents in the form of a side sectional view, the lid of a deep fryer in accordance with the invention in a position where it is opened beyond the vertical;

Fig. 2 represents a sectional side view of four semi-circular superposed grids and constituting a filter in accordance with the invention;

Fig. 3 represents a plan view of one of the grids; and

Fig. 4 represents a sectional side view showing the part of the lid and of the appliance vat on the side of the hinge when the lid is closed and the basin collecting the condensed liquids is withdrawn from its position within the appliance.

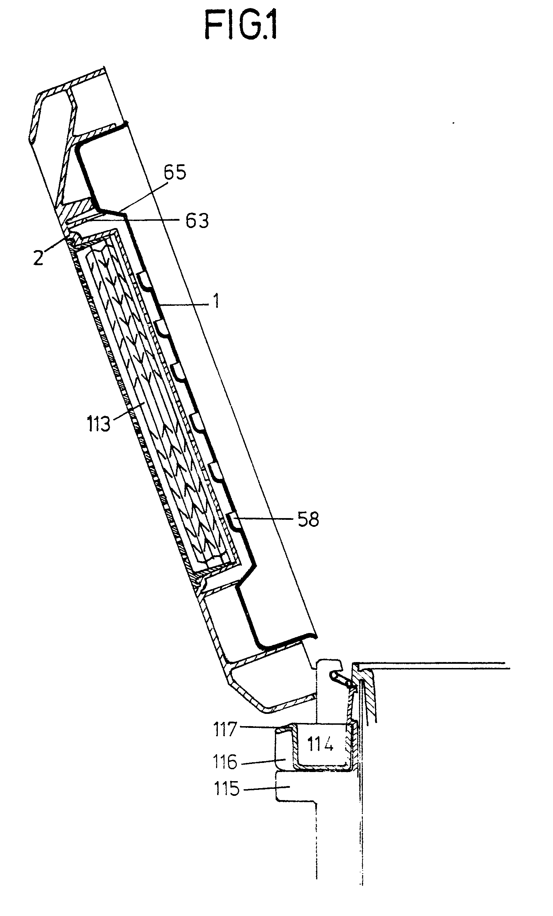

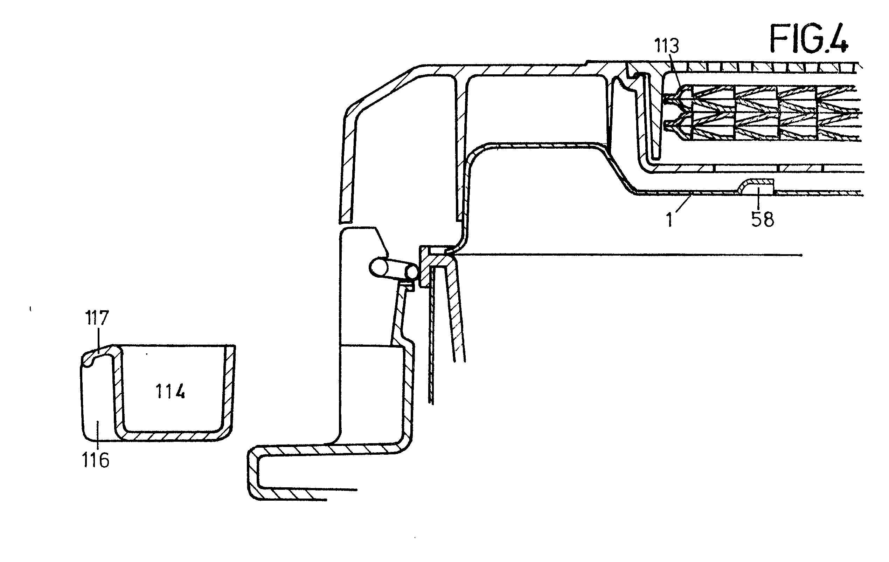

By referring to Fig. 1, the latter represents a lid substantially analogous to that of the above mentioned European application and some constituent parts of this prior appliance, particularly those appearing on Fig. 5 of this prior application, have been identified in Fig. 1 of the present description by the same reference numerals while new or substantially modified elements bear other reference numerals , 113 designating in particular the upper metal grid and which, superposed to three other identical metal grids, now replace the active charcoal filter cartridge shown in the prior application. On the other hand, the small basin collecting the condensed liquids and which was previously located in the lid and more particularly in the upper lid cover 2 in plastic material, is now replaced by basin 114 which can be housed into one of the pillars of the appliance vat and more particularly above one of the handles 115. This basin can be easily withdrawn for an emptying operation as shown in Fig. 4, with the help of a recess 116 on its front part which forms an inclined upper rim 117 enabling to withdrawn the basin.

As shown for instance by Fig. 1, vents 58 in the metal lid 1 are this time opened upwardly when the lid is in its open position as shown in Fig. 1. Indeed, when using the deep fryer in accordance with the prior application, it has been found that most of the condensation liquids were produced on the lower surface of the metal lid 1, i.e. on the righthand side for the position shown in Fig. 1. Particularly when using metal filters constituted by the grids 113, the quantity of liquid that is found on the upper surface of the metal lid 1 is very reduced. In this manner, it becomes possible to collect the condensed liquids not on the side of the upper surface of the metal lid 1, i.e. on the left for the position shown in Fig. 1, but well on the side of the lower surface. In this way, by reversing the direction of the vents 58 the evacuation of the relatively small quantities of liquid which can adhere by capillarity action to the upper surface of the metal lid 1 is facilitated, these condensed liquids being to a large extent transferred this time toward the lower surface of the metal lid 1 following the new direction of the vents 58.

On the other hand, the disappearance of a collecting basin for the condensed liquids in the lid and more particularly in the upper lid cover 2 in plastic material ensures an excellent joint between the upper lid cover 2 and the metal lid 1 by means of the skirt 63 which can now be in contact with the inclined annular part 65 of the metal lid 1 on its whole circumference and this without any interruption. In this manner, vapours coming from the vat of the appliance can only escape through the vents 58 and from there they are thus forced to pass through the filter constituted by the four superposed grids 113.

0026958

-6-

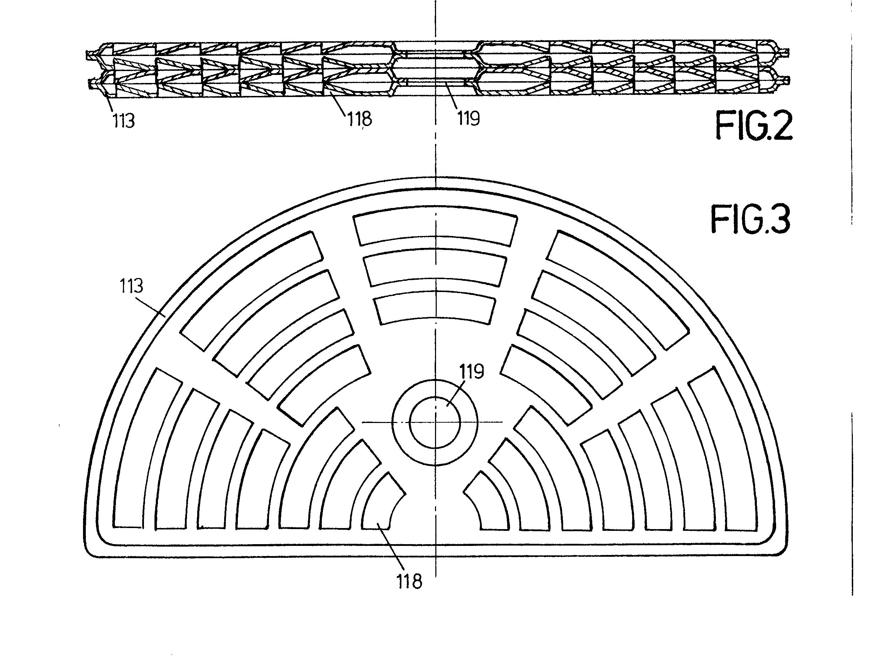

These are represented on Figs. 2 and 3, the first being a cross-sectional view which indicates that the four grids 113 are absolutely identical but are successively arranged in opposition. In this manner, the vents such as 118 which are provided in the semi-circular aluminium grids are alternately directed towards the bottom and the top and due to the location of these vents as shown by the plan view of Fig. 3, a maze effect is created facilitating elimination of vapours. As indicated in Figs. 2 and 3, a central hole 119 is foreseen in the semi-circular aluminium grid 113 so as to enable fixing four superposed grids in a manner analogous to that foreseen for the active charcoal cartridge in the prior application.

While the principles of the invention have been described above in connection with specific apparatus, it is to be clearly understood that this description is made only by way of example and not as a limitation on the scope of the invention.

-1-

Claims

1. Perforated lid able to rest on a cooking appliance and containing a filter for the fumes generated by a cooking process, characterized in that said filter is constituted by the superposition of a plurality of metal grids (113).

2. Perforated lid as claimed in claim 1, characterized in that said metal grids are foreseen with vents (118) opening on one surface of the grid and that the adjacent grids constituting said filter are mounted with their analogous sides in opposition so as to create a maze for the vapours going through the filter.

3. Perforated lid as claimed in claim 1, characterized in that said metal grids are dish shaped with the raised vent openings within the height of the dished grid.

4. Perforated lid as claimed in claims 2 and 3, characterized in that two dished grids are associated with their rims pressed against one another with said raised vent openings on the inside.

5. Perforated lid as claimed in claim 1, characterized in that said grids have a circular shape for at least part of their periphery and are provided with openings along annular parts.

6. Perforated lid as claimed in claim 2, characterized in that the configuration of said vents exhibits symmetry about a line dividing said grid into two equal parts.

7. Perforated hinged lid able to rest horizontally on top of a cooking appliance and adapted to unload liquid condensation products produced by the cooking by draining into a basin when it is pivoted out of its horizontal position, comprising a metal lid able to close the container part of the appliance and an upper lid cover in plastic material fixed on top of said metal lid and connected to the container by hinge means, characterized by a shape for said metal lid (1) enabling the collection of said liquid condensation products when the lid is opened beyond a vertical position and by mounting said basin (114) in the cooking appliance below said hinge means so as to enable draining into the basin upon closure of said lid.

8. Perforated hinged lid as claimed in claims 1 and 7, characterized by said metal grids being housed in said upper lid cover in plastic material (2) and with the latter including a substantially vertical skirt (63) wholly surrounding said grids and abutting against an inclined part (65) of said metal lid to force said fumes to pass through the grids.

9. Hinged perforated lid, able to rest horizontally above a cooking appliance in a closed position and vertically in an open one, provided with vents enabling the vapours produced in the appliance to reach a filter for the fumes generated by a cooking process and mounted in the lid, characterized by the fact that said vents (58) have their openings oriented in the direction opposite to the hinge.

FIG.1

-1/3-

0026958

FIG.2

FIG.3

FIG.4

0026958

# EUROPEAN SEARCH REPORT

European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 2 033 547 (MANUF. METALL. DE TOURNUS.) <br> * Page 1, lines 22-38; figure 1 * <br> -- | 1,5 | A 47 J 36/38 |
| | GB - A - 1 545 217 (VENT-CAIR INC.) <br> * Figure 3 * <br> -- | 1,2 | |
| | FR - A - 2 299 900 (GODEFROY) <br> * Page 3, lines 24-31; figures 1,2 * <br> -- | 1 | **TECHNICAL FIELDS SEARCHED (Int. Cl.³)** <br><br> A 47 J <br> F 24 C <br> B 01 D |
| | US - A - 3 463 077 (LESCURE) <br> * Figures 5 and 9 * <br> -- | 7,8 | |
| | FR - A - 1 302 954 (S.E.B.) <br> * Figure 6, page 2, right-hand column * <br> -- | 7 | |
| | GB - A - 1 297 801 (OLD HALL TABLEWARE LTD.) <br> * Page 2, lines 23-65; figures 3 and 4 * <br> ---- | 7 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | The present search report has been drawn up for all claims | | |
|---|---|---|---|
| Place of search <br> The Hague | Date of completion of the search <br> 15-01-1981 | Examiner <br> SCHARTZ | |

EPO Form 1503.1  06.78